(19) Europäisches Patentamt
European Patent Office
Office européen des brevets

(11) Publication number : 0 374 080 B1

(12) # EUROPEAN PATENT SPECIFICATION

(45) Date of publication of patent specification : **03.03.93 Bulletin 93/09**

(51) Int. Cl.$^5$ : **B29C 33/56,** B29C 33/64, C23C 14/06, C25D 3/04, C08G 77/04

(21) Application number : **89630212.2**

(22) Date of filing : **07.12.89**

(54) **Treatment of mold and use thereof for curing rubber.**

(30) Priority : **07.12.88 US 281155**

(43) Date of publication of application : **20.06.90 Bulletin 90/25**

(45) Publication of the grant of the patent : **03.03.93 Bulletin 93/09**

(84) Designated Contracting States : **DE FR GB**

(56) References cited :
**EP-A- 0 079 860**
**EP-A- 0 158 379**
**FR-A- 2 103 432**
**THIN SOLID FILMS, vol. 155, no. 2, 30th December 1987, pages 175-185; Y. SEGUI et al.: "In situ electrical property measurements of metal/(plasma polysiloxane)/metal structures"**

(73) Proprietor : **THE GOODYEAR TIRE & RUBBER COMPANY**
**1144 East Market Street**
**Akron, Ohio 44316-0001 (US)**

(72) Inventor : **Shuttleworth, Derek**
**180 Forestbrook Boulevard**
**Munroe Falls Ohio 44262 (US)**
Inventor : **Bennett, Cecil, Jr.**
**1776 18th Street**
**Cuyahoga Falls Ohio 44223 (US)**
Inventor : **Waddell, Walter Harvey**
**3271 Edington Road**
**Fairlawn Ohio 44313 (US)**

(74) Representative : **Leitz, Paul**
**Goodyear Technical Center-Luxembourg**
**L-7750 Colmar-Berg (LU)**

EP 0 374 080 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field

This invention relates to the preparation of a mold for the purpose of molding various rubber articles. The invention particularly relates to a protective coating for aluminum molds for the purpose of utilization in a rubber tire molding operation.

### Background

Rubber compounds are typically molded under conditions of heat and pressure in suitable molds, typically metal mold surfaces, to form various manufactured articles. For example, rubber tires of various construction can be prepared thereby as well as various industrial products such as belts, hose, seals, bumpers, mountings and diaphragms.

Although molds of various construction can be utilized therefor, aluminum alloy molds are typically used in order to reduce weight of the mold itself and for ease of manufacture. During the molding process, various contaminants typically build up on the mold surface and tend to degrade the molding operation by reducing the ability of the mold to release the rubber product after it is molded and, further, by damaging the mold surface itself thereby causing the resulting surface of the molded article to be degraded.

Typically the mold surface becomes somewhat pitted upon reconditioning by shot blasting, thus, yielding an inconsistent appearance of the surface of subsequent molded articles. Thus, frequent mold cleanings tend to be disadvantageous.

Cleaning such contaminated mold surfaces by removing the residue followed by reconditioning the mold surfaces is expensive and time consuming.

Various methods have been utilized in the past to reduce such degradation of the mold surface, which have included the application of various coating compounds to the mold surface itself. However, it still remains desirable to provide a suitable method of treating an aluminum mold surface for which it is intended to mold rubber products.

EP-A-0 158 379 discloses a master suitable for the manufacture of electro-plated negative copies of metal in which the master comprises a preform which on at least one side has a layer of electroplated aluminum, the surface of which has a desired profile and is coated with a titanium nitride layer using a sputtering process.

### Disclosure and Practice of the Invention

The invention as claimed discloses a process of providing a top coat molding surface for an aluminum mold substrate, a mold for curing rubber articles as well as a process of curing a tire in such mold.

The invention is considered particularly useful for enabling releases of such articles having a generally toroidal shape combined with intricate contours.

In the practice of this invention, the plasma polymerized organopolysiloxane can be suitably applied, for example, by depositing a siloxane, such as for example, hexamethyldisiloxane plasma from a radio-frequency plasma environment. This can be accomplished by placing the substrate (aluminum) in a vacuum chamber and using the radio frequency discharge to excite a plasma in the organopolysiloxane vapor at a substrate temperature in the range of about 150°C to about 250°C. It is observed that a very hard polymer of the siloxane is formed on the aluminum surface in contrast to a much softer polymer which would be formed by a reaction of the same siloxane at a substrate temperature of about room temperature (25°C).

Thus, for the purposes of this invention, such deposition is referred to as forming a plasma polymerized organopolysiloxane film on the mold surface as a top coat from an organopolysiloxane.

A plasma can be described as a partially ionized gas composed of neutrals, or un-ionized particles, ions, electrons, radicals, metastables and elements of radiation, formed at relatively low gas pressure (typically below atmospheric pressure) by electrical energy having a frequency of at least about 10kHz or greater - up to about 3GHz. An organic type of plasma formed from organic materials can react by rearranging and depositing, often substantially simultaneously depositing, a polymeric film onto a substrate surface to form a coating thereof which is typically and normally significantly different from coatings formed from similar or conventional polymers since they can be highly crosslinked as deposited. The polymer coating can contain the elements of the starting gas but reconfigured to form a hard, conforming, well adhering and relatively inert coating. Such plasma coating characteristics and methods are well known to those having skill in such art.

The organopolysiloxanes used for the plasma coating aspect of this invention are generally characterized by being volatile at low pressures. They also usually characterized by having, generally, the formulation:

$$O(-\underset{R_3}{\overset{R_1}{|}}{\overset{|}{Si}}-R_2)_2$$

where $R_1$, $R_2$ and $R_3$ are individually selected from methyl, ethyl, methoxy, ethoxy, hydroxyl and vinyl radicals with the proviso that $R_1$ is optionally a hydrogen or halogen, preferably chlorine, radical with the restrictions that the organopolysiloxane be characterized by being volatile at a pressure of 10mm of mercury at about 25°C (thus having a significant vapor pressure at the indicated 10mm mercury pressure - e.g. at least about one mm mercury pressure). Also useful for this purpose of this invention are such organopolysiloxanes in cyclic form having three or more siloxane units, for example hexamethylcyclotrisiloxane, having such volatility characterization.

Apart from coating of plasma polymerized organopolysiloxane, coatings of titanium nitride and chromium were observed to significantly enhance the surface of an aluminum tire mold used in the preparation rubber tires. A titanium carbide coating was also considered to similarly enhance mold surface properties. Significant observed properties enhanced were (a) improved chemical inertness to the rubber composition being molded to thus reduce mold surface contamination buildup and, thereby, enhance the ability to clean mold surface itself at periodic times, (b) the hardness of the mold surface which imparted improved resistance to mold cleaning procedures to thereby extend the lifetime of the mold and produce tires with better appearance, and, (c) consist surface appearance of sequentially molded rubber products.

The following examples are provided to further describe the invention although the invention is not limited thereto. Unless otherwise stated, the parts and percentages are by weight.

## EXAMPLE I

Aluminum coupons (rectangular shaped aluminum pieces measuring about one inch by two inches by 1/4 inch thick), suitable for molding flat pieces of rubber were obtained and treated in accordance with this invention and compared to a control aluminum coupon not treated. The representative coupons are identified as the Control A (not treated), Experimental B for sputtered titanium nitride treatment (TiN), Experimental C for sputtered titanium carbide treatment (TiC), Experimental D for hard chromium plating treatment, Experimental E for the plasma organopolysiloxane polymer coating formed at low substrate temperature (25°C), treatment, and Experimental F for the plasma siloxane polymer coating, formed at high substrate temperature (150° - 250°C), treatment. Various tests were conducted on the treated coupons as shown in the following Table 1.

TABLE 1

RELATIVE RESULTS OF PHYSICAL TESTING[1]

| Treatment | Relative Abrasion[2] | Relative Cured Compound Release[3] |
|---|---|---|
| Control A[4] | 100 | 100 |
| Exp B[5] (TiN) | 16 | 48 |
| Exp C[6] (TiC) | 48 | 92 |
| Exp D[7] (Chromium) | 1 | 68 |
| Exp E[8] (Siloxane) | 86 | 83 |
| Exp F[9] (Siloxane) | 29 | 89 |

[1] Results are normalized to those of Control A which is assigned a value of 100.

[2] The abrasion test was conducted by a modified ASTM D4060 procedure using a Taber Abraser and a modified sample holder for the aluminum coupons. The test was conducted by monitoring sample weight loss as a function of the number of cycles under the weighted abrasive wheel. Comparisons were drawn between samples based upon the weight loss after 50 cycles. Under this test, lower values are less abrasive and are thus, for the purposes of this invention, considered better than the control sample value of 100.

[3] The cured compound release property was determined by placing the coupons in a mold, covering with uncured rubber to fill the mold and finally applying a strip of rubber coated fabric on top. A starter strip of mylar film was placed at one end of the test piece and the whole item cured in a press. The measurement

was performed by peeling the cured rubber from the coupon in an Instron test machine using a one-way t-peel type of geometry. The force required to remove the sample was determined from the Instron output and used to compare samples to the unmodified control. Under this test, lower values indicate better release and are thus, for the purposes of this invention, considered better than the control sample value of 100.

[4] The aluminum coupons for this Example were prepared from a previously cast a356 grade aluminum alloy mold. Surface finish was that obtained by milling with a steel tool bit on a workshop milling machine without subsequent polishing. The molding surface was smooth with a relatively fine textured finish as left by the steel tool bit. The coupons were cleaned to remove residual oils and Control A not otherwise subsequently treated.

[5] The TiN was applied by reactive sputtering of titanium in a nitrogen gas plasma onto the surface of an aluminum coupon after first chemical cleaning and electroless deposition of a nickel layer.

[6] The TiC was applied by reactive sputtering of titanium in a methane gas plasma onto the surface of an aluminum coupon after first chemical cleaning and electroless deposition of a nickel layer.

[7] The chromium layer was applied onto the surface of an aluminum coupon by electrodeposition.

8 The plasma polymerized organopolysiloxane was applied by plasma polymerizing hexamethyldisiloxane using a radio frequency (RF) of 13.6 MHz generated plasma of hexamethyldisiloxane vapor in a vacuum chamber (less than one mm of mercury), onto the surface of an aluminum coupon at room temperature (about 25°C).

9 The plasma polymerized organopolysiloxane was applied as in (8), above, at an aluminum substrate temperature of about 200°C.

EXAMPLE II

Segments of an eight-segment aluminum tire tread mold were treated as follows:

Several segments of the mold suitable for molding truck tires (size 11R22.5) were prepared and treated in accordance with this invention and compared to control aluminum segments prepared in the same manner but not treated. The segments were made by casting aluminum in plaster molds followed by machining and finishing to form a continuous tread ring composed of eight separate segments. Two of the segments were considered as controls and the remaining six segments submitted to various treatments and then assembled to form a tread ring for a tire cure mold. The representative segments are identified as the Controls A and B, Experimental C for sputtered titanium nitride, Experimental D for hard chromium and Experimental E for the plasma polymerized siloxane.

After six weeks normal operation of sequentially curing tires in a tire cure press containing a tire cure mold composed sidewall sections and a tread ring composed of the eight mold segments, the mold was disassembled for cleaning in a manual blast cabinet using plastic fragment cleaning media. The time to clean each mold segment to restore consistency of surface appearance of molded rubber product by shot blasting with the plastic fragments is shown in Table 3. The organic coating, namely plasma polymerized siloxane, was actually removed by such cleaning procedure.

TABLE 2

RELATIVE CLEANING TIMES[1]

| Treatment | Relative Cleaning Time |
|---|---|
| Control A[2] | 105 |
| Control B[2] | 95 |
| Exp C[3] (TiN) | 43 |
| Exp D[4] (Chromium) | 35 |
| Exp E[5] (Siloxane) | 62 |

[1] Results are normalized to the average times to clean Controls A and B, which is assigned a value of 100, using a manual bead blasting machine and plastic beads.

[2-5] Information as referenced in TABLE 1

Thus, the practice of this invention enabled a reduced mold cleaning time.

## Claims

1. A process of providing a topcoat molding surface for an aluminum mold substrate characterized by depositing a plasma polymerized organopolysiloxane polymer on said surface from an organopolysiloxane radio frequency plasma environment.

2. The process of claim 1 characterized in that the organopolysiloxane is volatile at a pressure of 10 mm mercury at 25°C.

3. The process of claim 1 characterized in that the organopolysiloxane is in cyclic form having three or more siloxane units such as hexamethylcyclotrisiloxane.

4. The process of claim 1 characterized in that the organopolysiloxane is hexamethyldisiloxane.

5. The process of claim 2 characterized in that the organopolysiloxane has generally the formula:

$$O(-\overset{\displaystyle R_1}{\underset{\displaystyle R_3}{\overset{|}{\underset{|}{Si}}}}-R_2)_2$$

where $R_1$, $R_2$, and $R_3$ are selected from at least one of methyl, ethyl, ethoxy, methoxy, hydroxyl and vinyl radicals with the proviso that $R_1$ is optionally a hydrogen or halogen radical or is such organopolysiloxane in cyclic form having three or more siloxane units.

6. The process of claim 1 characterized in that the substrate surface temperature is in the range of 150°C

to 250°C.

7. The process of claim 1 characterized in that the substrate temperature is about 200°C.

8. The process of claim 1 characterized in that the substrate temperature is about 25°C.

9. Aluminum mold for molding and curing rubber articles under conditions of heat and pressure having at least one of its molding surfaces obtained according to the process defined in any of claims 1 to 8.

10. A process of molding rubber tires under conditions of heat and pressure in an aluminum mold having at least one of its molding surfaces obtained according to the process defined in any of claims 1 to 8.

## Patentansprüche

1. Verfahren zur Bereitstellung einer Formoberfläche mit Oberflächenbeschichtung für ein Aluminiumform-Substrat, gekennzeichnet durch Abscheidung eines Plasma-polymerisierten Organopolysiloxan-Polymers auf diese Oberfläche aus einer Organopolysiloxan-Hochfrequenz-Plasma-Umgebung.

2. Verfahren nach Anspruch 1, dadurch gekennzeichnet, daß das Organopolysiloxan bei einem Druck von 10 mm Quecksilbersäule bei 25°C flüchtig ist.

3. Verfahren nach Anspruch 1, dadurch gekennzeichnet, daß das Organopolysiloxan in cyclischer Form mit drei oder mehr Siloxaneinheiten, wie z.B. Hexamethylcyclotrisiloxan, vorliegt.

4. Verfahren nach Anspruch 1, dadurch gekennzeichnet, daß das Organopolysiloxan Hexamethyldisiloxan ist.

5. Verfahren nach Anspruch 1, dadurch gekennzeichnet, daß das Organopolysiloxan allgemein die Formel

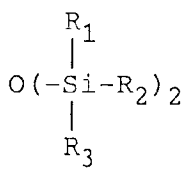

aufweist, worin $R_1$, $R_2$ und $R_3$ aus mindestens einem von Methyl-, Ethyl-, Ethoxy-, Methoxy-, Hydroxy- und Vinyl-Resten ausgewählt sind, mit der Maßgabe, daß $R_1$ gegebenenfalls ein Wasserstoff- oder Halogenrest ist, oder ein derartiges Organopolysiloxan in cyclischer Form mit drei oder mehr Siloxaneinheiten ist.

6. Verfahren nach Anspruch 1, dadurch gekennzeichnet, daß die Temperatur der Substratoberfläche im Bereich von 150°C bis 250°C liegt.

7. Verfahren nach Anspruch 1, dadurch gekennzeichnet, daß die Substrattemperatur etwa 200°C ist.

8. Verfahren nach Anspruch 1, dadurch gekennzeichnet, daß die Substrattemperatur etwa 25°C ist.

9. Aluminiumform zum Formen und Vulkanisieren von Kautschukgegenständen unter Wärme- und Druckbedingungen, die mindestens eine ihrer Formoberflächen nach dem in einem der Ansprüche 1 bis 8 definierten Verfahren erhalten hat.

10. Verfahren zur Formung von Kautschukreifen unter Wärme- und Druckbedingungen in einer Aluminiumform, die mindestens eine ihrer Formoberflächen gemäß dem in einem der Ansprüche 1 bis 8 definierten Verfahren erhalten hat.

## Revendications

**1.** Procédé pour procurer une surface de moulage à couche de finition pour un substrat de moule en aluminium, **caractérisé par** le fait de déposer un polymère d'organopolysiloxane polymérisé au plasma sur ladite surface à partir d'un environnement de plasma d'organopolysiloxane à haute fréquence.

**2.** Procédé selon la revendication 1, **caractérisé en ce que** l'organopolysiloxane est volatil sous une pression de 10 mm de mercure à 25°C.

**3.** Procédé selon la revendication 1, **caractérisé en ce que** l'organopolysiloxane est de forme cyclique et possède trois unités siloxane ou plus, tel que l'hexaméthylcyclotrisiloxane.

**4.** Procédé selon la revendication 1, **caractérisé en ce que** l'organopolysiloxane est l'hexaméthyldisiloxane.

**5.** Procédé selon la revendication 2, **caractérisé en ce que** l'organopolysiloxane répond, en général, à la formule :

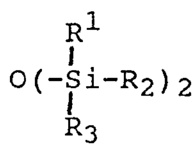

où $R_1$, $R_2$ et $R_3$ sont choisis parmi au moins un radical méthyle, un radical éthyle, un radical éthoxy, un radical méthoxy, un radical hydroxyle et un radical vinyle, avec cette réserve que $R_1$ peut éventuellement représenter un radical d'hydrogène ou un radical d'halogène, ou bien est un organopolysiloxane de forme cyclique possédant trois unités siloxane ou plus.

**6.** Procédé selon la revendication 1, **caractérisé en ce que** la température de la surface du substrat se situe dans le domaine de 150°C à 250°C.

**7.** Procédé selon la revendication 1, **caractérisé en ce que** la température du substrat est d'environ 200°C.

**8.** Procédé selon la revendication 1, **caractérisé en ce que** la température du substrat est d'environ 25°C.

**9.** Moule en aluminium pour mouler et vulcaniser des articles en caoutchouc dans des conditions de chaleur et de pression, dont au moins une des surfaces de moulage est réalisée conformément au procédé défini dans l'une quelconque des revendications 1 à 8.

**10.** Procédé de moulage de bandages pneumatiques en caoutchouc dans des conditions de chaleur et de pression dans un moule en aluminium dont au moins une des surfaces de moulage est réalisée conformément au procédé défini dans l'une quelconque des revendications 1 à 8.